# EUROPÄISCHE PATENTSCHRIFT

(11) **EP 3 527 106 B1**
(45) Veröffentlichungstag und Bekanntmachung des Hinweises auf die Patenterteilung: **07.10.2020**
(21) Anmeldenummer: 19155895.6
(22) Anmeldetag: 07.02.2019
(51) Int. Cl.: A46B 9/04, A46B 13/00, A46B 13/02, A61C 3/06, A61C 17/22, A61C 17/14, B24B 29/00, A46B 9/02, B24D 13/14

(54) **SCHLEIF- ODER POLIERBÜRSTE**
SANDING OR POLISHING BRUSH
BROSSE DE PONÇAGE OU DE POLISSAGE

(30) Priorität: 14.02.2018 DE 102018001162
(43) Veröffentlichungstag der Anmeldung: 21.08.2019
(73) Patentinhaber: EVE Ernst Vetter GmbH, 75210 Keltern (DE)
(72) Erfinder: VETTER, Dennis, 75210 Keltern (DE)
(74) Vertreter: Petersen, Frank

(56) Entgegenhaltungen:
- WO-A1-00/41592
- DE-U1- 29 724 404
- US-A- 5 983 434
- US-A1- 2013 007 969
- US-A1- 2016 206 413

## Beschreibung

Die Erfindung betrifft eine Schleif- oder Polierbürste für die Politur von dentalen Oberflächen mit einem um eine Zentralachse rotierbaren Grundkörper, der mit Borsten versehen ist, die sich mit ihren Mittelachsen im Wesentlichen parallel zur Richtung der Zentralachse erstrecken.

Bürsten dieser Art sind beispielsweise bekannt aus der DE 202005008615. Sie werden insbesondere eingesetzt durch Zahnärzte bei der Bearbeitung von okklusalen Flächen. Bei zahntechnischen Produkten wie keramischen Plomben, Inlays, Kronen etc. oder entsprechenden Elementen aus Kompositwerkstoffen kann es notwendig sein, okklusale Flächen oder Bereiche abzutragen, um einen passenden Biss zu erzeugen, d.h. das Passen voneinander gegenüberliegenden Zähnen bzw. Zahnreihen.

Bei der Verwendung von groben Schleifwerkzeugen wird dabei aber die okklusale Fläche zumindest partiell in unerwünschter Weise aufgeraut und damit verletzt, was anschließend zu unerwünschtem abrasiven Verschleiß in diesem Bereich von darunter liegenden Schichten führen kann. Es hat sich herausgestellt, dass bei einem Glätten dieser Rauigkeiten der unerwünschte abrasive Verschleiß in erheblichem Umfang vermieden wird, so dass entsprechend bearbeitete zahntechnische Produkte trotz des erwähnten Schleifens im okklusalen Bereich die gewünschte Widerstandsfähigkeit und damit Standzeit erreichen können. Für dieses Glätten werden die zuvor geschliffenen Bereiche poliert.

Um ein entsprechendes Polieren zu ermöglichen, werden die eingangs erwähnten Schleif- oder Polierbürsten verwendet, wobei die Borsten mit Schleifpartikeln versetzte Kunststoffmaterialien sind.

Ansonsten sind Bürsten mit geneigten Borsten für eine allgemeine Werkstückbearbeitung bekannt aus der DE 29724404 U1 oder als Zahnbürsten aus der US 2013/0007969 A1.

Jetzt hat sich aber bei der Verwendung von Polierbürsten, wie sie beispielsweise aus der oben genannten DE 202005008615 U1 bekannt sind, herausgestellt, dass die sich mit ihren Mittelachsen im Wesentlichen parallel zur Zentralachse der Bürste erstreckenden Borsten sich mit ihren Spitzen bzw. distalen Enden in Radialrichtung nach außen bewegen, wenn über die Bürste in Axialrichtung ein Anpressdruck aufgebracht wird. Damit ist insbesondere ein gewünschtes punktgenaues Polieren von geschliffenen und damit angerauten okklusalen Flächen in erheblichem Umfang erschwert.

Bei vergleichbaren Polierbürsten tritt aber auch immer wieder der Effekt auf, dass sich die Borsten mit ihren Spitzen bzw. distalen Enden in Radialrichtung nach innen bewegen, wodurch sich der Abstand zum Rotationszentrum ändert. Damit nimmt aber auch die Energie ab, die auf die zu bearbeitende Oberfläche eingebracht wird, und damit wird die Effizienz verringert. Es wird also weniger Material abgetragen. Um dies zu kompensieren tendieren Anwender dazu, einen höheren Druck auf die Bürste aufzubauen, wodurch gleichzeitig aber auch der Wärmeeintrag in die Borsten erhöht wird. Durch die damit einhergehende Erwärmung werden die Borsten weicher und die Effizienz der Bearbeitung sinkt weiter. Die angesprochene Erwärmung ist aber auch nachteilig, weil sie sich auf das zu bearbeitende Werkstück auswirkt und nahezu alle modernen Dentalmaterialien wärmesensibel sind.

Aufgabe der vorliegenden Erfindung ist es daher, eine Bürste wie eingangs beschrieben derart weiter zu entwickeln, dass die gesamten nachteiligen Effekte nicht mehr auftreten.

Diese Aufgabe wird erfindungsgemäß gelöst durch eine Schleif- oder Polierbürste, die die Merkmale des beigefügten Hauptanspruches aufweist.

Für diese Bürste gilt, dass die sich im Wesentlichen parallel zur Zentralachse erstreckenden Borsten mit ihrer jeweiligen Mittelachse eine Neigung gegenüber der Zentralachse aufweisen in Umfangsrichtung.

Vorzugsweise ist diese Neigung im Wesentlichen in Umfangsrichtung der Rotationsbewegung, was bedeutet, dass die distalen Enden also Spitzen der Borsten den Fußpunkten der Borsten, d.h. den Punkten, an denen die Borsten an dem Grundkörper befestigt sind bzw. in diesen übergehen, bei einer Rotation der Bürste um die Zentralachse vorauseilen.

Die Borsten werden bei einer derartigen Konstellation mit ihren distalen Enden, also ihren Spitzen quasi über die zu polierende Fläche geschoben, wodurch die an der Borstenspitze resultierenden Kräfte ein Ausweichen nach radial außen als auch nach radial innen erschweren.

Die Neigung der Borsten in die Umfangsrichtung beträgt etwa 2° bis 10°, vorzugsweise insbesondere 3° bis 6°.

Bei einer Ausführungsform der Erfindung weisen die Borsten außerdem eine Neigung in Richtung auf die Zentralachse nach innen auf. Durch diese zusätzliche Kippung zur Zentralachse hin wird bei der Rotation der Bürste mit Lastaufbringung auf die Borsten eine Art "Verzopfung" der nebeneinander liegenden Borsten bewirkt, wodurch diese sich gegenseitig abstützen und damit die gewünschte möglichst punktuelle Kraftaufbringung zusätzlich unterstützt wird.

Die Neigung der Borsten bzw. ihrer Mittelachse in Richtung zur Zentralachse beträgt etwa 4° bis 20°, vorzugsweise insbesondere 8° bis 12°.

Bei einer Weiterbildung der Erfindung sind die Borsten in Richtung ihrer Erstreckung zu ihrem distalen Ende hin, also vom Grundkörper weg, sich verjüngend ausgebildet. Dies erleichtert eine Ableitung der beim Poliervorgang am distalen Ende der Borsten in diese eingeleiteten Kräfte durch die Borsten hindurch bei einer gleichzeitigen Stabilisierung der Borsten gegen ein unerwünschtes Ausweichen. - Insbesondere wird durch die erwähnte Gestaltung die Ausweichbewegung der Borsten vereinheitlicht, was zu einem besseren Arbeitsergebnis bei Verwendung der Bürsten führt.

Ein derartiges Ausweichen kann auch noch dadurch verstärkt gesteuert werden, dass benachbarte Borsten in einem axialen Bereich trennbare Verbindungen miteinander haben. Über derartige trennbare Verbindungen ist einerseits ein frei beweglicher, am distalen Ende der Borste liegender Bereich in seiner axialen Erstreckung zu beschränken, in welchem die Borste Kräften ausweichen kann, die auf sie an der Borstenspitze einwirken.

Dass die Verbindungen trennbar sind, hat einen weiteren Effekt: Bei einem Verschleiß der vorderen Borstenspitze und einem daraus resultierenden Verkürzen dieser Borsten versteifen sich die frei beweglichen Bereiche der Borsten. Dadurch werden die Kräfte, die durch die Borsten hindurchgeleitet werden, dazu genutzt, um die trennbare Verbindung von benachbarten Borsten sukzessive aufzutrennen. So kann die längenabhängige Steifheit der Borsten an ihren Enden beibehalten werden, da auf die beschriebene Weise die einzelnen Borsten sich fortschreitend von ihren benachbarten Borsten trennen und sich so sukzessive vereinzeln.

Es hat sich herausgestellt, dass dies zu einer über die Gebrauchsdauer einer Bürste sehr gleichmäßigen Wirksamkeit bei einer gleichzeitig längeren Standzeit der Bürste führt. - Gerade auch die oben erwähnte gleichmäßige Ausweichbewegung von einzelnen Borsten führt zu einem langsamen, gleichmäßigen Aufreißen bzw. Auftrennen der Verbindungen. Damit kann eine entsprechende Bürste auch zeitlich länger bzw. mehrmals verwendet werden.

Die trennbare Verbindung wird bei einer bevorzugten Weiterbildung der Erfindung insbesondere als Filmelement ausgebildet.

Durch die Gestaltung der Dicke der genannten Filmelemente ist man auch in der Lage, das Aufreißverhalten dieser trennbaren Verbindung bzw. Filmelemente zu beeinflussen, wodurch auch das Verschleißverhalten der Bürste positiv zu bestimmen ist.

Durch entsprechend unterschiedliche Dicke der Filmelemente über ihre Höhe kann beispielsweise auch ein gezielt langsames Auftrennen der Verbindung zwischen benachbarten Borsten erreicht werden, wobei damit auch bewirkt werden kann, dass sich eine derartige Verbindung nicht kurzfristig oder schlagartig über die gesamte Höhe des Verbindungsabschnittes öffnet.

Grundsätzlich kann ein entsprechendes Filmelement sowohl in einer Umfangsrichtung als auch in einer Radialrichtung der Bürste angeordnet sein.

Bei einer Erstreckung in Umfangsrichtung kann sich das Filmelement ähnlich einer Fahne zwischen zwei benachbarten Borsten erstrecken. Bei einer Erstreckung in Radialrichtung fungiert das Filmelement wie eine Verklebung zwischen zwei sich berührenden Umfangsflächen zweier benachbarter Borsten.

Es hat sich herausgestellt, dass mit erfindungsgemäß ausgestalteten Bürsten die Borsten sich bei der Verwendung der Bürste nur unwesentlich verändern. Daraus kann zurückgeschlossen werden, dass sie im Bearbeitungsvorgang nur wenig thermisch belastet werden und damit auch das zu bearbeitende, wärmesensible Dentalmaterial kaum thermisch belastet wird. Damit können mit einer erfindungsgemäß gestalteten Bürste die hohen Anforderungen an unterschiedlichen Druck- und Zugverhältnisses beherrscht werden, die bei der Politur von dentalen Oberflächen mit ihren zu bearbeitenden Freiflächen auftreten.

Weitere Vorteile und Merkmale der Erfindung ergeben sich aus der nachfolgenden Beschreibung eines Ausführungsbeispiels. Dabei zeigt:
- Fig. 1: die Seitenansicht der erfindungsgemäßen Bürste;
- Fig. 2: die Aufsicht auf eine erfindungsgemäße Bürste gemäß Fig. 1;
- Fig. 3: die Ansicht von benachbarten Borsten verbunden durch ein Filmelement in Umfangsrichtung;
- Fig. 4: die Aufsicht auf eine alternative Ausgestaltung von Borsten verbunden durch ein Filmelement in Radialrichtung.

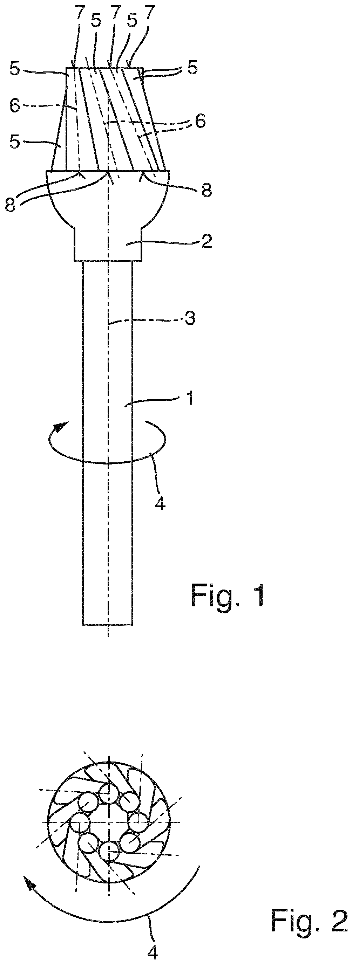

In Fig. 1 erkennt man die Seitenansicht einer erfindungsgemäßen Schleif- oder Polierbürste. Sie weist an ihrem unteren Ende einen Stiel 1 auf, mit dem sie in einen Instrumentenhalter für ein rotierendes Werkzeug eingesetzt werden kann. Ein derartiges Werkzeug wird üblicherweise bei Zahnärzten oder Zahntechnikern eingesetzt. Dabei kann der Stiel 1 insbesondere an seinem unteren Ende bedarfsweise auch mit einem (hier nicht dargestellten) Mehrkant o.ä. versehen sein, um über einen Formschluss eine Kraftübertragung innerhalb des Instrumentenhalters zu erreichen.

Ein üblicher Durchmesser für einen derartigen Stiel liegt in der Größenordnung von 1 bis 2 mm.

An seinem oberen Ende ist der Stiel 1 drehfest mit einem Grundkörper 2 versehen. Grundkörper 2 und Stiel 1 können dabei sowohl aus unterschiedlichen Materialien (z.B. Stahl oder Kunststoff) oder auch aus nur einem Material bestehen und in letzterem Fall also auch einstückig miteinander hergestellt sein.

Der Grundkörper 2 und der Stiel 1 sind bei einer Verwendung der hier dargestellten Schleif- oder Polierbürste um eine Zentralachse 3 rotierbar. Dabei wird eine Drehrichtung bei der hier dargestellten Bürste in eine Umlaufrichtung bei Aufsicht in Uhrzeigersinn gemäß dem Pfeil 4 vorgesehen.

Der Grundkörper 2 ist an einem dem Stiel 1 abgewandten Bereich mit einer Vielzahl von Borsten 5 bestückt, die sich im Wesentlichen parallel zur Zentralachse 3 erstrecken. Der Durchmesser einer derartigen Schleif- oder Polierbürste liegt im Bereich zwischen etwa 5 und 10 mm.

Die Borsten 5 der Bürste sind mit Schleifpartikeln versehen, sei es dass diese in das Material der Borsten integriert oder aber aufgeklebt sind, so dass mittels Aufbringen einer Kraft entlang der Zentralachse 3 die Spitzen 7 der Borsten 5 gegen ein zu polierendes Element gedrückt werden können und hier in gewünschter Weise bei der dabei vorgesehenen Rotation über Abrasion zu einer Politur dieses Elementes führen.

Üblicherweise sind die Borsten und der Grundkörper einstückig miteinander hergestellt. Sie bestehen z.B. aus einem mit Schleifpartikeln imprägnierten Kunststoff wie beispielsweise PUR, Kunstkautschuk, Polyamid, Silikon o.ä.

Die Härte des Borstenmaterials liegt damit in einem Bereich von etwa 80 bis 100 SHORE A.

Im hier dargestellten Beispiel sind die Borsten 5 mit ihren Mittelachsen 6 nicht parallel zur Zentralachse 3 ausgerichtet sondern hier ist eine Neigung vorgesehen, wobei die Borsten 5 mit ihren distalen Enden in Richtung der Drehrichtung 4 geneigt sind, also mit ihren distalen Enden 7 ihren Fußpunkten 8 bei einer Rotation vorauseilen. Die Fußpunkte 8 sind dabei die Stellen, an denen die Borsten 5 in den Grundkörper 2 übergehen.

Die genannte Neigung in Dreh- und damit in Umfangsrichtung beträgt etwa 3° bis 6°.

Des Weiteren weisen bei dem hier dargestellten Ausführungsbeispiel die Mittelachsen 6 der Borsten 5 eine Neigung in Richtung auf die Zentralachse 3 auf, so dass die distalen Enden 7 der Borsten 5 mit einem geringeren Radius um die Zentralachse 3 rotieren als die Fußpunkte 8 der Borsten. - Dies ist in der Aufsicht in der Figur 2 gut zu erkennen.

Die Neigung der Borsten in Radialrichtung nach innen beträgt etwa 8° bis 12°.

Durch die Neigung(en) der Borsten wird bewirkt, dass sie sich bei einer entsprechenden Kraftaufbringung parallel zur Richtung der Zentralachse 3 miteinander verdrillen und verzopfen und sich so gegeneinander abstützen und damit stabilisieren.

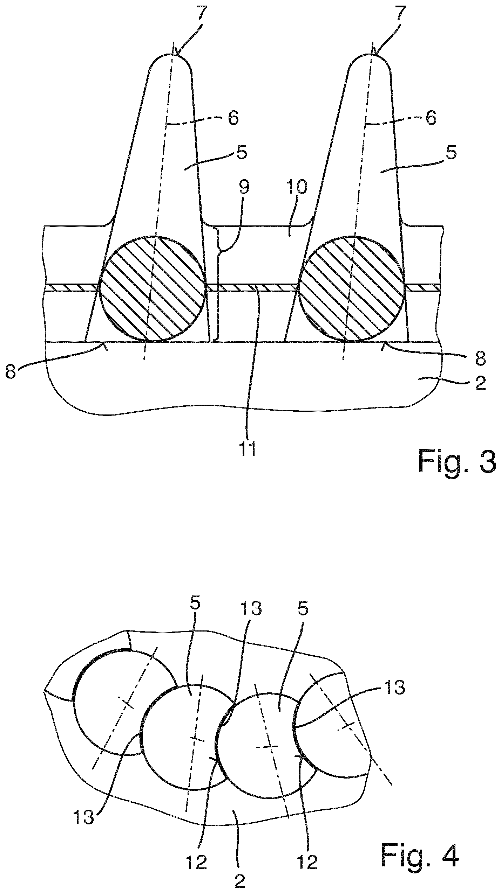

Eine weitere Möglichkeit um die Borsten zu stabilisieren ist in den Figuren 3 und 4 dargestellt.

Dabei erkennt man in der Fig. 3 eine Seitenansicht von zwei benachbarten Borsten entlang der Umfangsrichtung. Diese Borsten 5 sind an ihrem Fußpunkt 8 mit dem Grundkörper 2 verbunden und erstrecken sich von diesem mit ihren Mittelachsen 6 zu ihren distalen Enden 7, wobei sie sich konisch verjüngen.

Die beiden benachbarten Borsten 5 sind dabei in einem axialen Bereich 9 durch ein Filmelement 10 miteinander verbunden, das einstückig an den Borsten 5 angeformt ist und sich in Umfangsrichtung der Bürste erstreckt.

Das Filmelement 10 ist nun so ausgestaltet, dass es aufreißen kann, wenn die Kräfte, die von den sich während eines Poliervorganges frei bewegenden, distalen Enden 7 der Borsten 5 in es eingetragen werden, einen bestimmten Wert übersteigen. Dadurch verringert sich die Größe des axialen Bereiches 9, in dem zwei benachbarte Borsten 5 miteinander verbunden sind. Gleichzeitig wird damit der oberhalb dieses axialen Bereiches 9 liegende Abschnitt der Borsten 5 verlängert, so dass bei einem Verschleiß der Borsten 5, was mit einem Wandern der Borstenspitze 7 in Richtung des Fußpunktes 8 verbunden ist, dieser oberhalb des genannten axialen Bereiches liegende Abschnitt in seiner Länge in etwa gleich bleibt oder aber auch zunimmt. Damit bleibt die freie, ungestützte Länge der Borste 5 trotz der verschleißbedingten Verkürzung der Borste 5 einigermaßen gleich und damit auch deren von dieser gleichbleibenden Länge abhängige Steifigkeit. Damit verändern sich auch die Poliereigenschaften der Bürste nicht trotz eines fortschreitenden Verschleißes.

Die Filmelemente 10 sind, wie in dem eingezeichneten Querschnitt zu erkennen ist, in ihrer Dicke gegenüber der Dicke der Borsten 5, die sie miteinander verbindet, erheblich reduziert.

In der Fig. 4 erkennt man eine Aufsicht auf eine Bürste mit mehreren und eng zusammenstehenden Borsten 5. Diese weisen jeweils einseitig konkave Ausnehmungen 12 auf, in die sich benachbarte Borsten einfügen.

In den sich damit zwischen zwei benachbarten Borsten befindlichen konkaven Ausnehmungen sind im Wesentlichen in Radialrichtung der Bürste verlaufende Filmelemente 13 vorgesehen, die jeweils zwei benachbarte Borsten 5 miteinander verbinden. Insbesondere sind diese Filmelemente 13 dabei als Verklebungen ausgeführt, entlang derer die benachbarten Borsten sich voneinander trennen können, wenn sie sich wie oben beschrieben verschleißbedingt verkürzen und damit das freie Ende der Borsten 5 sich längenabhängig versteift.

Zusammengefasst sind somit mit derartig weitergebildeten Bürsten nicht nur präzisere Polierergebnisse zu erreichen sondern auch die Standzeit einer entsprechenden Bürste ist erfindungsgemäß zu verlängern.

### Bezugszeichenliste

- 1: Stiel
- 2: Grundkörper
- 3: Zentralachse
- 4: Pfeil (Drehrichtung)
- 5: Borsten
- 6: Mittelachse
- 7: Distale Enden
- 8: Fußpunkte
- 9: Axialer Bereich
- 10: Filmelement
- 11: Querschnitt
- 12: konkave Ausnehmungen
- 13: Filmelemente

## Patentansprüche

1. Schleif- oder Polierbürste für die Politur von dentalen Oberflächen mit einem um eine Zentralachse (3) rotierbaren Grundkörper (2), der mit Borsten (5) versehen ist, die sich mit ihren Mittelachsen (6) in Richtung der Zentralachse (3) erstrecken,
**dadurch gekennzeichnet,**
**dass** die Borsten (5) eine Neigung in Umfangsrichtung aufweisen und in Richtung der Zentralachse (3) nach innen gekippt sind.

2. Schleif- oder Polierbürste gemäß Anspruch 1,
**dadurch gekennzeichnet,**
**dass** die Neigung der Borsten (5) in Umfangsrichtung in Rotationsrichtung (4) ist.

3. Schleif- oder Polierbürste gemäß einem oder mehreren der vorhergehenden Ansprüche,
**dadurch gekennzeichnet,**
**dass** die Borsten (5) sich in ihrer Erstreckung vom Grundkörper (2) weg verjüngen.

4. Schleif- oder Polierbürste gemäß einem oder mehreren der vorhergehenden Ansprüche,
**dadurch gekennzeichnet,**
**dass** benachbarte Borsten (5) in einem axialen Bereich (9) trennbare Verbindungen (10, 13) miteinander haben.

5. Schleif- oder Polierbürste gemäß Anspruch 4,
**dadurch gekennzeichnet,**
**dass** der axiale Bereich (9) benachbart zum Grundkörper (2) ist.

6. Schleif- oder Polierbürste gemäß einem oder mehreren der vorhergehenden Ansprüche 4 oder 5,
**dadurch gekennzeichnet,**
**dass** die Verbindungen in Umfangsrichtung verlaufende Filmelemente (10) sind.

7. Schleif- oder Polierbürste gemäß einem oder mehreren der vorhergehenden Ansprüche 4 oder 5,
**dadurch gekennzeichnet,**
**dass** die Verbindungen im Wesentlichen in Radialrichtung verlaufende Filmelemente (13), insbesondere Klebeelemente sind.

## Claims

1. Grinding or polishing brush for polishing of dental surfaces, with a main body (2) which is rotatable about a central axis (3) and is provided with bristles (5) which extend with their centre axes (6) in the direction of the central axis (3)
**characterized in that**
the bristles (5) have an inclination in the circumferential direction and are tilted inward in the direction of the central axis (3).

2. Grinding or polishing brush as claimed in claim 1,
**characterized in that**
the inclination of the bristles (5) is in the direction of rotation (4).

3. Grinding or polishing brush as claimed in one or more of the preceding claims,
**characterized in that**
the bristles (5) taper in their extent away from the main body (2).

4. Grinding or polishing brush as claimed in one or more of the preceding claims,
**characterized in that**
adjacent bristles (5) have separable connections (10, 13) with one another in an axial region (9).

5. Grinding or polishing brush as claimed in claim 4,
**characterized in that**
the axial region (9) is adjacent to the main body (2).

6. Grinding or polishing brush as claimed in one or more of the preceding claims 4 or 5,
**characterized in that**
the connections are film elements (10) running in the circumferential direction.

7. Grinding or polishing brush as claimed in one or more of the preceding claims 4 or 5,
**characterized in that**
the connections are film elements (13), in particular adhesive elements, running substantially in the radial direction.

## Revendications

1. Brosse de ponçage ou de polissage affectée au polissage de surfaces dentaires, munie d'un corps de base (2) apte à tourner autour d'un axe central (3) et pourvu de soies (5) dont les axes médians (6) s'étendent dans la direction dudit axe central (3),
**caractérisée par le fait**
**que** les soies (5) présentent une inclinaison dans le sens périphérique et sont basculées, vers l'intérieur, en direction de l'axe central (3).

2. Brosse de ponçage ou de polissage selon la revendication 1,
**caractérisée par le fait**
**que** l'inclinaison des soies (5), dans le sens périphérique, pointe dans la direction (4) de la rotation.

3. Brosse de ponçage ou de polissage selon l'une ou plusieurs des revendications précédentes,
**caractérisée par le fait**
**que** les soies (5) s'amenuisent en s'éloignant du corps de base (2).

4. Brosse de ponçage ou de polissage selon l'une ou plusieurs des revendications précédentes,
**caractérisée par le fait**
**que** des soies (5) voisines comportent des liaisons mutuelles (10, 13) séparables dans une région axiale (9).

5. Brosse de ponçage ou de polissage selon la revendication 4,
**caractérisée par le fait**
**que** la région axiale (9) se trouve au voisinage du corps de base (2).

6. Brosse de ponçage ou de polissage selon l'une ou plusieurs des revendications 4 ou 5 précédentes,
**caractérisée par le fait**
**que** les liaisons sont des éléments pelliculaires (10) s'étendant dans le sens périphérique.

7. Brosse de ponçage ou de polissage selon l'une ou plusieurs des revendications 4 ou 5 précédentes,
**caractérisée par le fait**
**que** les liaisons sont des éléments pelliculaires (13), en particulier des éléments adhésifs, s'étendant pour l'essentiel dans le sens radial.
